# EUROPEAN PATENT SPECIFICATION

(11) **EP 2 142 827 B1**
(45) Date of publication and mention of the grant of the patent: **06.07.2011**
(21) Application number: 08718951.0
(22) Date of filing: 28.03.2008
(51) Int. Cl.: F16J 15/40, F16J 15/32, B60K 6/10

(54) **High speed flywheel**
Hochgeschwindigkeitsschwungrad
Volant d'inertie à haute vitesse

(30) Priority: 04.05.2007 GB 0708665
(43) Date of publication of application: 13.01.2010
(73) Proprietor: Flybrid Systems LLP, Northamptonshire NN12 8GX (GB)
(72) Inventor: HILTON, Jonathan, James, Robert, Oxfordshire OX15 6AX (GB); CROSS, Douglas, Isaac, Lascelles, Buckinghamshire MK5 6FE (GB)
(74) Representative: Mackenzie, Andrew Bryan
(86) International application number: PCT/GB2008/001132
(87) International publication number: WO 2008/135707

(56) References cited:
- GB-A- 1 492 965
- GB-A- 2 121 124
- US-A- 5 816 114
- US-A1- 2004 201 179

## Description

This invention relates to flywheels, and particularly to high speed flywheels for use in vehicles.

Flywheels typically comprise a relatively heavy mass, mounted on a shaft and arranged to rotate with the shaft. The use of flywheels in vehicles is known, for example as an aid for acceleration or deceleration of the vehicle. It is also known to use a flywheel for energy storage, whereby the kinetic energy of the flywheel is converted into electrical energy. The kinetic energy of a flywheel is directly proportional to the rotational inertia and the square of the angular velocity. A flywheel used for energy storage in a vehicle must achieve an optimum balance of mass, inertia and rotational speed. The faster the flywheel can be made to rotate, the smaller and lighter it will be for a given storage capacity.

High speed flywheels are usually contained within an enclosure to which a vacuum is applied, in order to reduce energy losses caused by drag, and prevent the temperature of the flywheel from rising too high as a result of friction with surrounding air. An example of a flywheel comprising an evacuated core is shown in US5,816,114 (Gregoire et al.).

When a flywheel is contained within an evacuated housing, it is necessary to provide a seal between the housing and the shaft in order to allow a vacuum to be maintained within the housing. Currently known seals for shafts on which flywheels are supported are only suitable for use with shafts rotating at less than 20,000 rpm.

An example of a currently known seal for a flywheel shaft is a ferrofluid seal, wherein an oil-based fluid is doped with ferrous particles, and a magnet is provided to hold the fluid in place in an annulus around the shaft. The fluid forms a hermetic seal to maintain the vacuum within the flywheel housing.

The efficiency of ferrofluid seals is limited by the doping of the fluid with ferrous particles, which increases the viscosity of the fluid. Furthermore, the shaft must be formed of a particular grade of stainless steel, therefore providing a limitation on the strength of the shaft. Although it is desirable to minimise the diameter of the shaft in order to minimise drag and heat generation on operation of the flywheel, for a given shaft material, the diameter must be sufficient to render the shaft sufficiently strong to support the flywheel and / or deliver the required torque.

A further problem of currently known flywheel seals is that overheating often occurs when a flywheel is operated at high speed, as the heat which is generated cannot be dissipated sufficiently.

It is an aim of the present invention to provide a seal between a flywheel and shaft which are rotating at high speed, i.e. above 20,000, to enable a vacuum to be maintained within the flywheel housing.

### Statement of invention

Accordingly the present invention provides a seal for a high speed flywheel as claimed in claim 1 of the appended claims. Further, the invention provides a method according to claim 8.

### Advantages & preferred features

An advantage of the current invention is that seal fluid is effectively cooled and the likelihood of overheating is reduced, therefore enabling the seal to be used for flywheels which are operated at speeds in excess of 20,000 rpm. It will be appreciated that the seal will also operate at lower speeds.

In the present invention, the material of the torque transfer shaft is not limited to a particular grade stainless steel. Therefore a high strength material may be used, thus allowing the diameter of the shaft to be minimised, and accordingly drag and heat generation minimised, thereby increasing the efficiency of the flywheel, and decreasing the potential for overheating of the seal.

Furthermore, the sealing fluid used in the present invention does not require doping with ferrous particles, therefore a fluid with a lower viscosity than currently known fluids may be used.

The fluid may be inserted into the seal cavity in situ, i.e. once the flywheel has been mounted onto the shaft, via a fill nipple. Whilst the cavity is being filled with fluid, air can be expelled from the cavity via a bleed nipple.

Preferably the seal includes an insert provided with a bore, wherein the size of the bore determines the volume of the annular cavity, and accordingly the amount of oil which must to be inserted to fill the cavity. The bore is preferably circular, and may be formed so as to be eccentric with the outer diameter of the insert, and therefore eccentric with the shaft on which the flywheel is supported. Therefore the fluid cavity is also eccentric with the shaft, advantageously inducing fluid flow on operation of the flywheel, thus increasing the thermal heat transfer between the fluid and the housing, and accordingly reducing the potential for overheating of the seal.

A piston may be provided within the first housing section of the seal. The piston can be moveable in accordance with the expansion of the fluid as it becomes heated on operation of the flywheel, therefore preventing an excessive pressure building up within the fluid as it becomes heated. The piston can also act to balance the pressure inside the seal with that of the air pressure outside, thus maintaining a zero pressure drop across the first lip seal. As the pressure within the seal will therefore be equal to ambient pressure, leakage of ambient air into the seal cavity will not occur.

The fluid used in the present invention does not vaporise at the pressure of the evacuated core of the flywheel. Therefore if fluid is caused to seep into the evacuated flywheel core, a loss of vacuum is not caused as the fluid will not vaporise within the evacuated flywheel core.

The housing of the seal may be made from a light alloy, such as aluminium, having a good thermal conductivity. Where weight is not important, other materials having good thermal conductivity such as copper may be used. Therefore the cooling of the seal fluid is more efficient than in currently known ferrofluid type seals, which are surrounded by magnets and steel, which exhibit lower thermal conductivity than light alloys.

The lip seals may feature a sealing lip made of a polymer blend which includes PTFE.

### Specific Description

An embodiment of the present invention will now be described by way of example and with reference to the accompanying drawings in which:

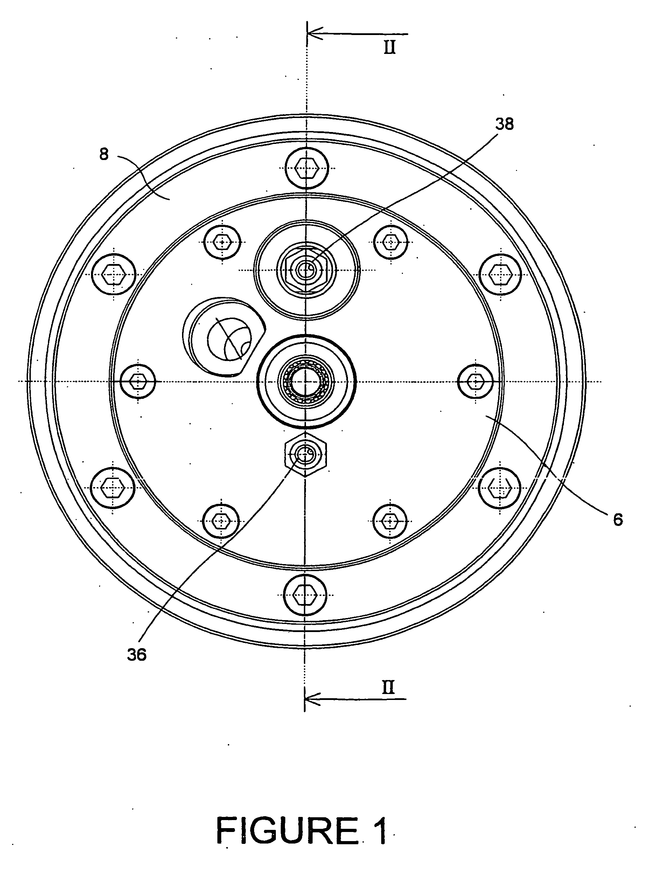

Figure 1 is a side elevation of a flywheel seal in accordance with the present invention;
Figure 2 is a cross sectional view of the flywheel seal of Figure 1 along the line II-II.
Figure 3 is a cross sectional view of the flywheel seal of Figure 2 along the line III-III.
Figure 4 is a cross sectional view of an alternative embodiment of a flywheel seal in accordance with the present invention.

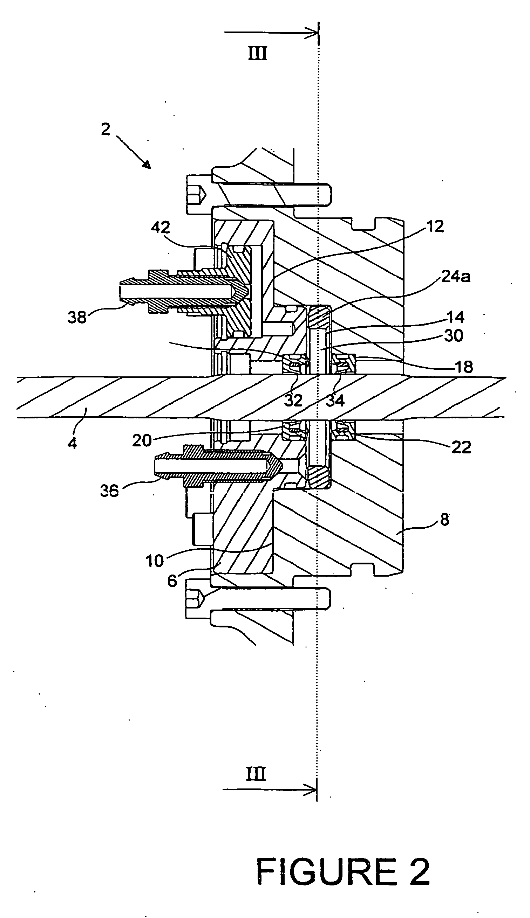

Referring to Figure 2, a seal 2 provides a hermetic seal against a torque transfer shaft 4. The seal comprises a light alloy housing formed of a first housing section 6 and a second housing section 8. The first housing section 6 and the second housing section 8 have complimentary stepped profiles 10, 12, such that the first housing section 6 fits into the second housing section 8.

On an assembled flywheel, the first housing section 6 faces outwardly from the flywheel and is accessible. The second housing section 8 faces inwardly into an evacuated flywheel core, and is therefore not accessible.

The first housing section 6 fits into the second housing section 8 such that a space 14 is formed between the housings. Annular shoulders 18 are formed in the first and second housing sections 6, 8 to accommodate a first modified PTFE lip seal 20 and second modified PTFE lip seal 22, respectively. The depth of each of the annular shoulders 18 is generally equal to the width of the lip seals 20, 22, such that the lip seals 20, 22 do not impinge upon the space 14.

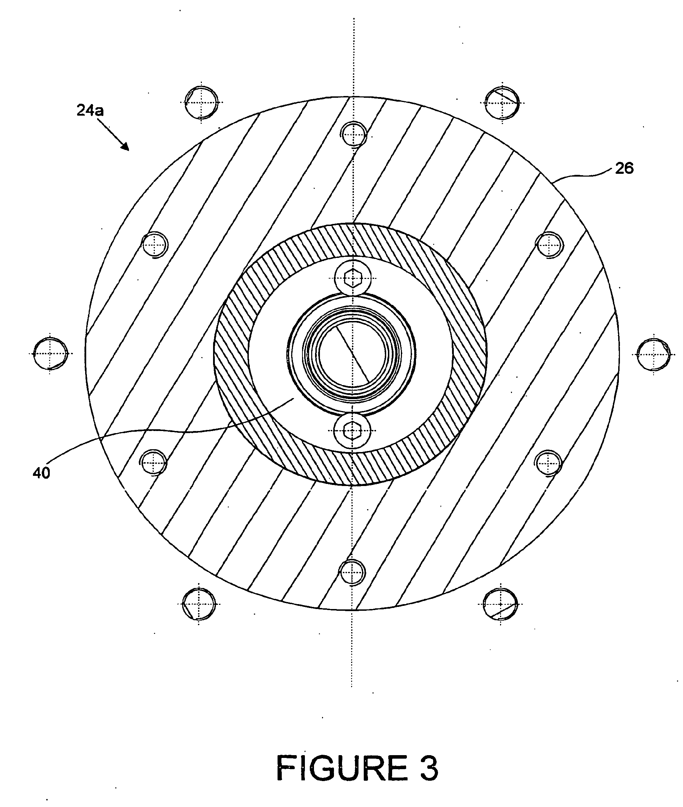

A ring-shaped insert 24a is provided in the space 14. The outer diameter 26 of the insert is such that it fits into the second housing section 8. Referring to Figure 3, the shaft passes through the centre of the insert 24a.

An annular cavity 30 is formed between the lip seals 20,22. The cavity is bounded by the lip seals 20, 22, the housing sections 6, 8, and the insert 24a. The insert 24a acts as a volume reducer, wherein the volume of the annular cavity is the volume of the space between the housing 20, 22 sections, less the volume of the insert 24a.

The seal 2 is mounted on the shaft 4 such that the shaft 4 passes through the housing sections 6, 8, lip seals 20, 22, and the centre of the insert 24a.

The lip seals 20, 22 are arranged such that a lip 32, 34 of the lip seals points towards the annular cavity 30 and is in contact with the shaft 4.

The cavity 30 is filled, via a fill nipple 36, with an oil based fluid 40 (Figure 3). Whilst the fluid is being inserted, air can be expelled from the cavity 30 via a bleed nipple 38. Once the cavity 30 has been filled with fluid 40, the fluid 40 forms a hermetic seal against the shaft 4. The first lip seal 20 separates the fluid 40 from the ambient air, and the second lip seal 22 separates the fluid 40 from the evacuated flywheel core.

As the fill nipple 36 and the bleed nipple 38 face outwardly from the flywheel and are accessible, the fluid 40 can be inserted into the cavity 30 in situ, i.e. after the flywheel has been mounted onto the shaft 4. The seal is formed by the fluid 40 surrounding the shaft 4; with the lip seals 20, 22 preventing the fluid 40 from seeping out of the cavity 30 and along the shaft 4.

When the flywheel is operated at high speeds, the fluid 40 also provides lubrication and cooling to prevent the lip seals 20, 22 from overheating. The heat absorbed by the fluid 40 is dissipated by conduction through the housing sections 6, 8.

A piston 42 is provided within the first housing section 6. The piston 42 is moveable in accordance with the expansion of the fluid 40 as it becomes heated on operation of the flywheel, therefore preventing an excessive pressure building up within the fluid 40 as it becomes heated. The piston 42 also acts to balance the pressure inside the seal with that of the air pressure outside, thus maintaining a zero pressure drop across the first lip seal 20. As the pressure within the cavity 30 is therefore equal to ambient pressure, leakage of ambient air into the cavity 30 is prevented. The second lip seal 22 acts to maintain a pressure drop of 1 bar. However, if any fluid 40 were to be caused to seep from the cavity 30, past the second lip seal 22 into the evacuated flywheel core, a loss of vacuum would not be caused, as the fluid will not vaporise at the pressure of the evacuated core.

The seal 2 may incorporate an alternative insert 24 as required. As the insert 24 reduces the volume of the cavity 30, a larger insert would occupy a larger proportion of the cavity 30, thereby reducing the amount of fluid 40 required to fill the cavity 30.

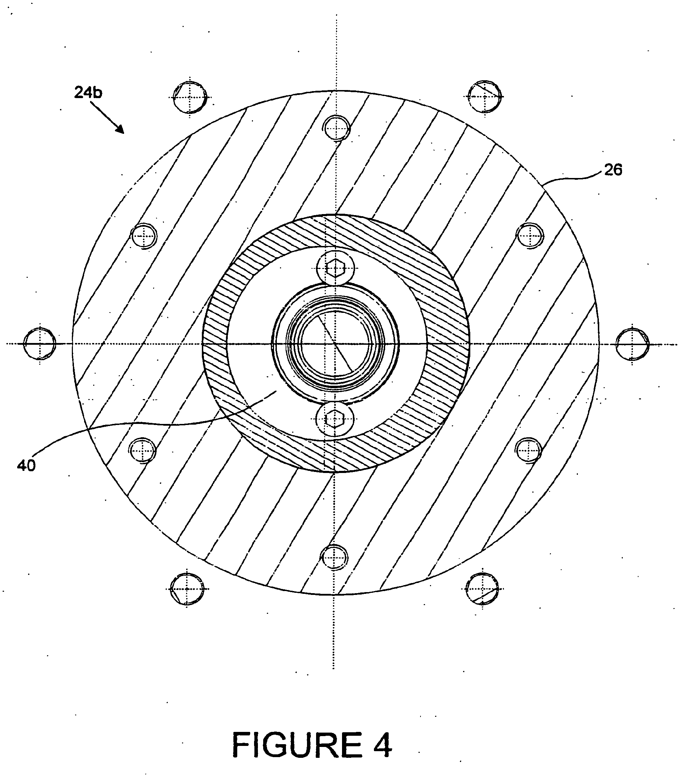

In the alternative embodiment illustrated in Figure 4, the centre of the annular insert 24b could be shaped such that it is not concentric with the outer diameter 26 of the insert 24b. Therefore when the flywheel and seal are assembled, the centre of the insert and the cavity 30 into which fluid 40 is inserted, are non-concentric with the shaft 4. Fluid flow would therefore be induced within the cavity 30 when the flywheel is operated, therefore preventing a build up of heat in particular areas, and minimising the temperature gradient across the fluid. Accordingly, thermal heat transfer between the fluid 40 and the housing sections 6, 8 is improved.

## Claims

1. A high speed flywheel including a seal (2), wherein the flywheel is mounted on a shaft (4) and comprises an evacuated core, and wherein the seal (2) comprises a housing (6, 8) and a cavity (30) within the housing (6, 8), a lip seal (20, 22) being provided either side of the cavity (30), the lip seals (20, 22) being in contact with and encircling the shaft (4), the cavity (30) having a volume which can be filled with fluid (40), means (36) for inserting fluid (40) into the cavity (30), and means (38) for allowing the expulsion of air from the cavity (30) during insertion of the fluid (40) into the cavity (30), whereby the fluid (40) can form a hermetical seal against the shaft (4); and wherein the fluid (40) inserted into the cavity (30) does not vaporise at the pressure of the evacuated flywheel core.

2. A flywheel as claimed in Claim 1 wherein a ring-shaped insert (24a, 24b) is provided to reduce the volume of the cavity (30).

3. A flywheel as claimed Claim 2 wherein the centre of the insert (24a, 24b) is circular.

4. A flywheel as claimed in Claim 3 wherein the bore is eccentric with the shaft (4).

5. A flywheel as claimed in any of the preceding claims wherein a piston (42) is provided, the piston (42) being moveable in accordance with expansion of the fluid (40).

6. A flywheel as claimed in any of the preceding claims wherein the housing is at least partially formed of a light alloy, such as aluminium.

7. A flywheel as claimed in any of the preceding claims wherein the sealing means are lip seals (20, 22) made of a polymer blend which includes PTFE.

8. A method of forming a seal for a flywheel mounted on a shaft (4), the flywheel comprising an evacuated core and a seal (2), the seal (2) comprising a fill nipple (36), a bleed nipple (38), and a cavity (30) between two lips seals (20, 22) in contact with the shaft (4), the method comprising steps of;
opening the fill nipple (36) and the bleed nipple (38); inserting fluid (40) into the fill nipple (3) until a cavity (30) formed between two lip seals (20, 22) in contact with the shaft (4) is filled, wherein as fluid (40) is inserted into the cavity (30), air is expelled form the cavity (30) via the bleed nipple (38);
and
closing the fill nipple (36) and the bleed nipple (38);
whereby the fluid (40) forms a hermetical seal against the shaft (4), and wherein the fluid (40) inserted into the cavity (30) does not vaporise at the pressure of the evacuate flywheel core.

## Patentansprüche

1. Hochgeschwindigkeits-Schwungrad, das eine Dichtung (2) einschließt, wobei das Schwungrad auf einer Welle (4) befestigt ist und einen evakuierten Kern umfasst, und wobei die Dichtung (2) ein Gehäuse (6, 8) und einen Hohlraum (30) in dem Gehäuse (6, 8) umfasst, wobei eine Lippendichtung (20, 22) auf jeder Seite des Hohlraumes (30) vorgesehen ist, wobei die Lippendichtungen (20, 22) in Kontakt mit der Welle (40) stehen und diese umgeben, wobei der Hohlraum (30) ein mit einem Fluid (40) füllbares Volumen, Einrichtungen (36) zum Einleiten eines Fluids (40) in dem Hohlraum (30) und Einrichtungen (38) aufweist, die das Ausstoßen von Luft aus dem Hohlraum (30) während des Einleitens des Fluids (40) in den Hohlraum (30) ermöglichen, wodurch das Fluid (40) eine hermetische Abdichtung gegenüber der Welle (4) bilden kann, und wobei das in dem Hohlraum (30) eingeleitete Fluid (40) bei dem Druck des evakuierten Schwungrad-Kern nicht verdampft.

2. Schwungrad nach Anspruch 1, bei dem ein ringförmiger Einsatz (24a, 24b) zur Verringerung des Volumens des Hohlraums (30) vorgesehen ist.

3. Schwungrad nach Anspruch 2, bei dem der Mittelpunkt des Einsatzes (24a, 24b) kreisförmig ist.

4. Schwungrad nach Anspruch 3, bei dem die Bohrung zu der Welle (4) exzentrisch ist.

5. Schwungrad nach einem der vorhergehenden Ansprüche, bei dem ein Kolben (42) vorgesehen ist, wobei der Kolben (42) entsprechend der Ausdehnung des Fluids (40) beweglich ist.

6. Schwungrad nach einem der vorhergehenden Ansprüche, bei dem das Gehäuse zumindest teilweise aus einer Leichtlegierung, wie zum Beispiel Aluminium, gebildet ist.

7. Schwungrad nach einem der vorhergehenden Ansprüche, bei dem die Dichtungseinrichtungen Lippendichtungen (20, 22) sind, die aus einer Polymer-Mischung hergestellt sind, die PTFE einschließt.

8. Verfahren zur Herstellung einer Dichtung für ein Schwungrad, das auf einer Welle (4) befestigt ist, wobei das Schwungrad einen evakuierten Kern und eine Dichtung (2) umfasst, wobei die Dichtung (2) einen Füll-Nippel (36), einen Auslass-Nippel (38) und einen Hohlraum (30) zwischen zwei Lippendichtungen (20, 22) umfasst, die mit der Welle (4) in Kontakt stehen, wobei das Verfahren die folgenden Schritte umfasst:
Öffnen des Füll-Nippels (36) und des Auslass-Nippels (38); Einleiten des Fluids (40) in den Füll-Nippel (30), bis der zwischen den mit der Welle (40) in Kontakt stehenden beiden Lippendichtungen (20, 22) gefüllt ist, wobei während des Einleitens des Fluids (40) in den Hohlraum (30) Luft aus dem Hohlraum (30) über den Auslass-Nippel (38) ausgestoßen wird; und
Schließen des Füll-Nippels (36) und des Auslass-Nippels (38);
wobei das Fluidl (40) eine hermetische Abdichtung gegen die Welle (4) bildet, und wobei das in dem Hohlraum (30) eingeleitete Fluid (40) bei dem Druck des evakuierten Schwungrad-Kerns nicht verdampft.

## Revendications

1. Volant d'inertie à haute vitesse comprenant un joint d'étanchéité (2), dans lequel le volant d'inertie est monté sur un arbre (4) et comprend un noyau sous vide, et dans lequel le joint d'étanchéité (2) comprend un logement (6, 8) et une cavité (30) à l'intérieur du logement (6, 8), un joint d'étanchéité à lèvres (20, 22) étant prévu de chaque côté de la cavité (30), les joints d'étanchéité à lèvres (20, 22) étant en contact avec et encerclant l'arbre (4), la cavité (30) ayant un volume qui peut être rempli avec du fluide (40), des moyens (36) pour introduire le fluide (40) dans la cavité (30), et des moyens (38) pour permettre l'expulsion de l'air de la cavité (30) pendant l'introduction du fluide (40) dans la cavité (30), moyennant quoi le fluide (40) peut former un joint d'étanchéité hermétique contre l'arbre (4) ; et
dans lequel le fluide (40) introduit dans la cavité (30) ne se vaporise pas à la pression du noyau du volant d'inertie sous vide.

2. Volant d'inertie selon la revendication 1, dans lequel un insert de forme annulaire (24a, 24b) est prévu pour réduire le volume de la cavité (30).

3. Volant d'inertie selon la revendication 2, dans lequel le centre de l'insert (24a, 24b) est circulaire.

4. Volant d'inertie selon la revendication 3, dans lequel l'alésage est excentrique avec l'arbre (4).

5. Volant d'inertie selon l'une quelconque des revendications précédentes, dans lequel un piston (42) est prévu, le piston (42) étant mobile selon l'expansion du fluide (40).

6. Volant d'inertie selon l'une quelconque des revendications précédentes, dans lequel le logement est au moins partiellement formé avec un alliage léger, tel que l'aluminium.

7. Volant d'inertie selon l'une quelconque des revendications précédentes, dans lequel les moyens d'étanchéité sont des joints d'étanchéité à lèvres (20, 22) réalisés avec un mélange de polymère qui comprend le PTFE.

8. Procédé pour former un joint d'étanchéité pour un volant d'inertie monté sur un arbre (4), le volant d'inertie comprenant un noyau sous vide et un joint d'étanchéité (2), le joint d'étanchéité (2) comprenant un raccord de remplissage (36), un raccord de purge (38), et une cavité (30) entre les deux joints d'étanchéité à lèvres (20, 22) en contact avec l'arbre (4), le procédé comprenant les étapes consistant à :
ouvrir le raccord de remplissage (36) et le raccord de purge (38); introduire le fluide (40) dans le raccord de remplissage (3) jusqu'à ce qu'une cavité (30) formée entre deux joints d'étanchéité à lèvres (20, 22) en contact avec l'arbre (4) soit remplie, dans lequel, au fur et à mesure que le fluide (40) est introduit dans la cavité (30), l'air est expulsé de la cavité (30) par le biais du raccord de purge (38) ; et
fermer le raccord de remplissage (36) et le raccord de purge (38);
moyennant quoi le fluide (40) forme un joint d'étanchéité hermétique contre l'arbre (4), et dans lequel le fluide (40) introduit dans la cavité (30) ne se vaporise pas à la pression du noyau de volant d'inertie sous vide.
